(19) Europäisches Patentamt
European Patent Office
Office européen des brevets

(11) **EP 4 773 720 A1**

(12) **EUROPEAN PATENT APPLICATION**
published in accordance with Art. 153(4) EPC

(43) Date of publication:
**08.07.2026 Bulletin 2026/28**

(21) Application number: **24883999.5**

(22) Date of filing: **01.07.2024**

(51) International Patent Classification (IPC):
***H04W 74/0833*** *(2024.01)*

(86) International application number:
**PCT/CN2024/102817**

(87) International publication number:
**WO 2025/091991 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.11.2023 CN 202311452949**

(71) Applicant: **ZTE Corporation**
**Shenzhen, Guangdong 518057 (CN)**

(72) Inventors:
• **BIAN, Luanjian**
**Shenzhen, Guangdong 518057 (CN)**
• **DAI, Bo**
**Shenzhen, Guangdong 518057 (CN)**
• **HU, Youjun**
**Shenzhen, Guangdong 518057 (CN)**
• **CHEN, Mengzhu**
**Shenzhen, Guangdong 518057 (CN)**
• **LIU, Kun**
**Shenzhen, Guangdong 518057 (CN)**

(74) Representative: **Aipex B.V.**
**Vestdijk 51**
**5611 CA Eindhoven (NL)**

(54) **RANDOM ACCESS METHOD, AND COMMUNICATION NODE AND STORAGE MEDIUM**

(57)    Provided are a random access method, a communication node, and a storage medium. The method includes: sending L-th access command information, where the L-th access command information is applied to second communication nodes associated with the L-th access command information, and the L-th access command information corresponds to the L-th level slot range; and access signals sent by the second communication nodes are detected within the L-th level slot range; where L is an integer greater than or equal to 1.

Send the L-th access command information, where the L-th access command information is applied to second communication nodes associated with the L-th access command information, and the L-th access command information corresponds to the L-th level slot range ⟩ Step 110

Detect, within the L-th level slot range, access signals sent by the second communication nodes, where L is an integer greater than or equal to 1 ⟩ Step 120

**FIG. 1**

## Description

TECHNICAL FIELD

The present application relates to the field of communication technology, for example, a random access method, a communication node, and a storage medium.

BACKGROUND

In the passive Internet of Things communication technology, for the purposes of inventorying, identifying, or accessing terminal devices, a network typically employs anti-collision algorithms to prevent uplink response signals sent by multiple terminal devices from colliding in time-frequency resources. In the related art, anti-collision algorithms mainly include the slot ALOHA algorithm, the BTree algorithm, and the Q selection algorithm. The Q algorithm performs relatively well in terms of applicable scenarios and device access efficiency.

In the Q algorithm, a terminal device determines a slot value range based on a Q value and randomly selects a slot within this range to send a response signal. A network node detects the response signal slot by slot and can dynamically adjust the Q value based on the idle and collision status of each slot.

However, a collision still exists in the access process of the Q algorithm. That is, multiple terminal devices randomly select the same slot. In this case, multiple terminal devices send response signals in the same slot. The network node cannot decode these response signals in such a slot, thus leading to a reduction in access efficiency for the terminal devices and an increase in access delay.

SUMMARY

The present application provides a random access method, a communication node, and a storage medium.

An embodiment of the present application provides a random access method. The random access method is applied to a first communication node and includes the following.

L-th access command information is sent, where the L-th access command information is applied to second communication nodes associated with the L-th access command information, and the L-th access command information corresponds to an L-th level slot range.

Access signals sent by the second communication nodes are detected within the L-th level slot range.

Here L is an integer greater than or equal to 1.

An embodiment of the present application further provides a random access method. The random access method is applied to a second communication node and includes the following.

L-th access command information is received.

In response to the L-th access command information satisfying an application condition of the L-th access command information, an L-th level slot range is determined according to the L-th access command information.

One slot value is selected within the L-th level slot range, and an access signal is sent in a slot corresponding to the slot value.

Here L is an integer greater than or equal to 1.

An embodiment of the present application further provides a first communication node. The first communication node includes a memory, a processor, and a computer program stored in the memory and executable by the processor. When the processor executes the program, the preceding random access method is performed.

An embodiment of the present application further provides a second communication node. The second communication node includes a memory, a processor, and a computer program stored in the memory and executable by the processor. When the processor executes the program, the preceding random access method is performed.

An embodiment of the present application further provides a storage medium. The computer-readable storage medium stores a computer program. When the computer program is executed by a processor, the preceding random access method is performed.

The preceding embodiments and other aspects of the present application and implementations thereof are described in more detail in the brief description of drawings, detailed description, and claims.

BRIEF DESCRIPTION OF DRAWINGS

FIG. 1 is a flowchart of a random access method according to an embodiment.
FIG. 2 is a flowchart of another random access method according to an embodiment.
FIG. 3 is a structural diagram of a random access apparatus according to an embodiment.
FIG. 4 is a structural diagram of another random access apparatus according to an embodiment.
FIG. 5 is a diagram illustrating the hardware structure of a first communication node according to an embodiment.
FIG. 6 is a diagram illustrating the hardware structure of a second communication node according to an embodiment.

DETAILED DESCRIPTION

To make the objects, technical solutions, and advantages of the present application clearer, embodiments of the present application are described in detail below in conjunction with the drawings. It is to be noted that if not in collision, embodiments of the present application and features therein may be combined with each other in any manner.

The steps illustrated in the flowcharts among the drawings may be performed by, for example, a computer system capable of executing a set of computer-executable instructions. Moreover, although logical sequences are illustrated in the flowcharts, in some cases, the illustrated or described steps may be performed in sequences different from those described herein.

In the passive Internet of Things communication technology, for the purposes of inventorying, identifying, or accessing terminal devices, a network typically employs anti-collision algorithms to prevent uplink response signals sent by multiple terminal devices from colliding in time-frequency resources. In the existing art, anti-collision algorithms mainly include the slot ALOHA algorithm, the BTree algorithm, and the Q selection algorithm. The Q algorithm performs relatively well in terms of applicable scenarios and device access efficiency.

In the Q algorithm, a terminal device determines a slot value range based on a Q value and randomly selects a slot within this range to send a response signal. A network node detects the response signal slot by slot and can dynamically adjust the Q value based on the idle and collision status of each slot.

However, a collision still exists in the access process of the Q algorithm. That is, multiple terminal devices randomly select the same slot. In this case, multiple terminal devices send response signals in the same slot. The network node cannot decode these response signals in such a slot, thus leading to a reduction in access efficiency for the terminal devices and an increase in access delay.

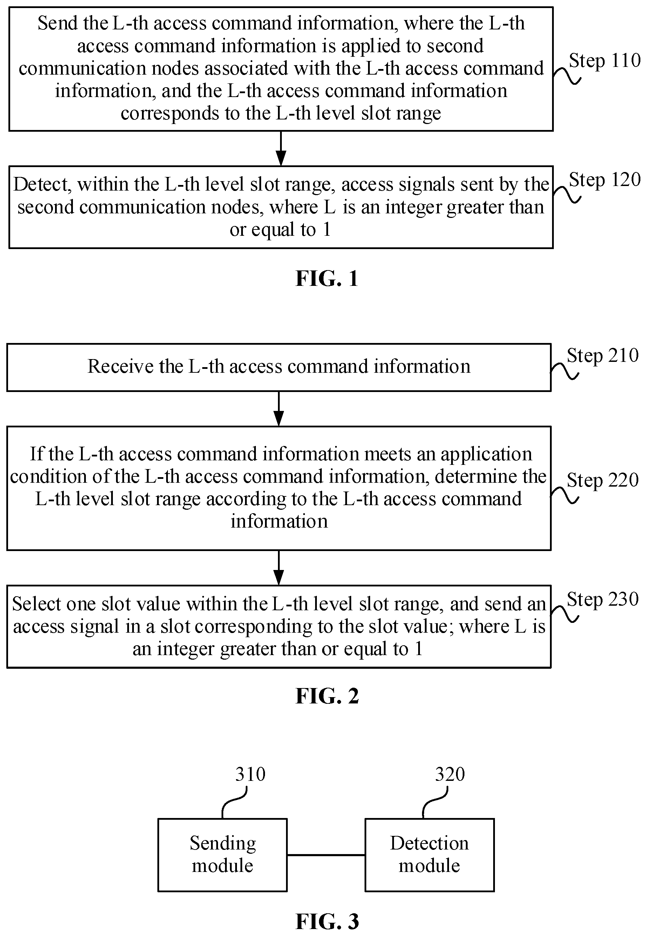

To solve the preceding technical problems, the present application provides a random access method. In the slot-based Q algorithm, within a collided slot, for second communication nodes in the slot, a sub-slot-based Q algorithm or ALOHA method is used for completing the access of these devices. After the access of these second communication nodes is completed, the process proceeds to the next slot. A sub-slot means that all the slots within the L-th level slot range are within one collided slot $n$ of the (L-1)-th level. That is, all the slots within the L-th level slot range are equivalent to sub-slots in one collided slot $n$ within the (L - 1)-th level slot range. FIG. 1 is a flowchart of a random access method according to an embodiment. As shown in FIG. 1, the random access method provided in this embodiment may be applied to a first communication node. The first communication node may be a base station. The random access method includes step 110 and step 120.

In step 110, the L-th access command information is sent. The L-th access command information is applied to second communication nodes associated with the L-th access command information. The L-th access command information corresponds to the L-th level slot range.

In this embodiment, the L-th access command information may be used for determining the L-th level slot range. L is an integer greater than or equal to 1. Each slot range may include N slots. In some specific embodiments, the content corresponding to the L-th access command information may be different according to different values of L.

In this embodiment, the second communication node may be a terminal device. Multiple second communication nodes may send access signals in the same slot within the (L - 1)-th level slot range. These second communication nodes may be taken as second communication nodes associated with the L-th access command information.

In this embodiment, if the first communication node detects a collision of access signals of K second communication nodes in a slot $n$ within the (L - 1)-th level slot range, and if K is greater than 1, the first communication node may send the L-th access command information. The function is to detect access signals of the K second communication nodes in the slot $n$ within the (L - 1)-th level slot range based on the L-th level slot range. Therefore, the slot $n$ within the (L - 1)-th level slot range includes all the slots in the L-th level slot range. That is, all the slots in the L-th level slot range are equivalent to sub-slots in one collided slot $n$ in the (L - 1)-th level slot range.

In step 120, an access signal sent by the second communication nodes is detected within the L-th level slot range.

In this embodiment, after receiving the L-th access command information, the second communication node associated with the L-th access command information may determine a slot range, that is, the L-th level slot range, according to the L-th access command information, select a slot value within the L-th level slot range, and send the access signal in the slot corresponding to the selected slot value so that the first communication node can detect the access signal sent by the second communication node within the L-th level slot range.

Here the access signal may be one random bit sequence. For example, the second communication node may randomly generate 16 bits to form a random bit sequence to be sent as an access signal. Alternatively, the access signal may include part of the information in the identification code (ID) of the second communication node. Alternatively, the access signal may also include other sequences or information, which is not specifically limited here.

In this embodiment, after sending the L-th access command information, the first communication node may detect the access signal in a slot within the L-th level slot range. When the first communication node detects the access signal in one slot, the three detection cases below may occur.

In detection case one, the first communication node correctly detects the access signal, indicating that a single second communication node selects one slot within the L-th level slot range and sends the access signal in the slot. Therefore, the first communication node can correctly detect the access signal sent by the second communication node in the slot.

In detection case two, the first communication node detects no access signal, which may be understood as that the slot is an idle slot and that no second communication node selects the slot to send an access signal.

For the two preceding detection cases, the first communication node may perform one of the operations below.

In operation 1, the first communication node sends the L-th level slot decrement information and enters the next slot within the L-th level slot range. After the second communication nodes associated with the L-th access command information receive the L-th level slot decrement information, the slot count value of the second communication nodes is decremented by 1.

In operation 2, the first communication node sends the (L - 1)-th level slot decrement information and enters the next slot within the (L - 1)-th level slot range. L > 1. This operation may be used in the case where all the slots in the L-th slot range have been traversed or the case where the first communication node needs to complete the current detection of the access signal based on the L-th slot range.

In operation 3, the first communication node sends the L-th access command information again. This operation may be used in the case where among second communication nodes associated with the L-th access command information, a to-be-accessed second communication node still exists after all the slots within the corresponding L-th level slot range have been traversed or the case where the first communication node needs to update the L-th level slot range.

In detection case three, the first communication node detects a collision of multiple access signals and sends the (L + 1)-th access command information. After receiving the (L + 1)-th access command information, a second communication node associated with the (L +1)-th access command information randomly selects one slot within the corresponding (L + 1)-th level slot range and sends the access signal in the slot corresponding to the selected slot value. The first communication node detects the access signal within the (L + 1)-th level slot range.

In this embodiment, the first communication node sends the L-th level slot range to the second communication nodes whose access signals collide in one collided slot, and the access of the second communication nodes is completed by using the Q selection algorithm or the ALOHA method based on the L-th level slot range. In this case, the first communication node can detect the access signals sent by the second communication nodes in the L-th level slot range, thereby improving the access efficiency of the second communication nodes and reducing access delay.

In an embodiment, the operation of sending the L-th access command information includes the following.

The L-th access command information is sent in the slot *n* within the (L - 1)-th level slot range. L is an integer greater than 1.

In this embodiment, the slot *n* is one slot within the (L - 1)-th level slot range.

In an embodiment, the operation of sending the L-th access command information includes the following.

The L-th access command information is sent when a collision of access signals from at least two second communication nodes is detected in the slot *n* within the (L - 1)-th level slot range. L is an integer greater than 1.

In this embodiment, when a signal collision of at least two second communication nodes is detected in one slot *n* within the (L - 1)-th level slot range, it may be indicated that the collided slot is one slot *n* within the (L - 1)-th level slot range. Therefore, the L-th access command information may be sent in the slot n.

In an embodiment, the L-th access command information includes at least one of the following: the command type index, the slot range parameter, and the association sequence number L.

Here the command type index corresponds to access command information. The slot range parameter is used for determining one slot range. The association sequence number L indicates that the access command information is the L-th access command information.

In this embodiment, the L-th access command information includes at least one of the command type index, the slot range parameter, and the association sequence number L. Here the command type index corresponds to an access command and is used for indicating to the second communication node that the information is access command information. The slot range parameter is used for determining one slot range. For example, the slot range parameter includes a Q value, the slot range may be determined to be 0 to $2^Q - 1$ according to the Q value. Q is an integer greater than or equal to 0. The association sequence number L indicates that the access command information is the L-th access command information. The L-th access command information is applied to the second communication nodes associated with the L-th access command information. Therefore, it is possible to determine which second communication nodes use the L-th access command information based on the association sequence number L.

In an embodiment, when L is equal to 1, the second communication nodes associated with the L-th access command information include all to-be-accessed second communication nodes.

In this embodiment, when the association sequence number L is equal to 1, the association sequence number that L = 1 corresponds to all the to-be-accessed second communication nodes. That is, second communication nodes associated with the first access command information are all the to-be-accessed second communication nodes.

In an embodiment, when L is greater than 1, the second communication nodes associated with the L-th access command information include to-be-accessed second communication nodes having sent access signals in the slot *n* within the (L - 1)-th level slot range.

In this embodiment, when the association sequence number L is greater than 1, the first communication node sends the L-th access command information in the slot *n* within the (L - 1)-th level slot range. In this case, the association sequence number L corresponds to the to-be-accessed second communication node having sent the access signal in the slot n. That is, a second communication node associated with the L-th access command information is the to-be-accessed second communication node having sent the access signal in the slot n.

In an embodiment, the second communication nodes associated with the L-th access command information include at least one of the following: to-be-accessed second communication nodes whose slot values selected within the (L - 1)-th level slot range belong to slots within a range from *n* to *n* + k - 1; and to-be-accessed second communication nodes whose slot values selected within the (L - 1)-th level slot range belong to

$$\mathrm{n} + \left\lceil \frac{\mathrm{M}-\mathrm{n}-1}{\mathrm{k}} \right\rceil \cdot \mathrm{j}.$$

Here *n* is greater than or equal to 0. L is greater than 1. The number k of slots is greater than or equal to 0. The L-th access command information includes the indication information of the number k of slots. j=1, 2, 3, ..., and k. M is the total number of slots within the (L - 1)-th level slot range.

In this embodiment, when the association sequence number L is greater than 1, the first communication node sends the L-th access command information in the slot *n* within the (L - 1)-th level slot range. The L-th access command information may further include the number k of slots. The association sequence number L corresponds to the to-be-accessed second communication node whose slot value selected within the (L - 1)-th level slot range belongs to *n* to *n* + k - 1 or corresponds to the to-be-accessed second communication node whose slot value selected within the (L - 1)-th level slot range belongs to $\mathrm{n} + \left\lceil \frac{\mathrm{M}-\mathrm{n}-1}{\mathrm{k}} \right\rceil \cdot \mathrm{j}$. Here k is greater than or equal to 0. j=1, 2, 3, ..., and k. M - *n* - 1 denotes to the number of slots remaining untraversed within the (L - 1)-th level slot range. M is the total number of slots within the (L - 1)-th level slot range.

In an embodiment, the slot *n* within the (L - 1)-th level slot range includes all the slots within the L-th level slot range.

In this embodiment, all the slots in the L-th level slot range are within one collided slot *n* within the (L - 1)-th level slot range, which may be understood as that all the slots in the L-th level slot range are equivalent to sub-slots in one collided slot *n* in the (L - 1)-th level slot range.

In an embodiment, the L-th access command information corresponding to the L-th level slot range includes the following.

When $1 \leq L < S$, the L-th access command information includes a parameter of the L-th level slot range. The parameter is used for determining the L-th level slot range.

When $L \geq S$, the L-th access command information corresponds to one fixed L-th level slot range.

Here S is a threshold value greater than 1.

In this embodiment, the L-th access command information corresponding to one slot range may include at least one of the three manners below.

In manner one, the L-th access command information includes the slot range parameter and one slot range may be determined according to the slot range parameter. For example, the slot range parameter includes one Q value. The slot range may be determined as 0 to $2^Q$ - 1 according to the Q value. Q is an integer greater than or equal to 0.

In manner two, the L-th access command information corresponds to one fixed slot range. For example, the L-th level slot range corresponding to the L-th access command information is 0 to 3; that is, four slot values are included. In the case of different values of L, the L-th level slot range may be different.

In manner three, the L-th access command information corresponds to the slot range determined based on the latest-sent slot range parameter. Therefore, the L-th access command information may be used for indicating that the second communication node reselects a slot based on the latest-received slot range parameter to send the access signal.

In a specific embodiment, when $1 \leq L < S$, the L-th access command information includes the L-th level slot range parameter, and the L-th level slot range may be determined according to the L-th level slot range parameter, which is the preceding manner one. When $L \geq S$, the L-th access command information corresponds to one fixed L-th slot range. Here S is a threshold value and is greater than 1, which is the preceding manner two.

In an embodiment, the random access method further includes sending the L-th level slot decrement information. The L-th level slot decrement information is used for indicating that the slot count value of the second communication nodes is decremented by 1 after the second communication nodes associated with the L-th access command information receive the L-th level slot decrement information.

In this embodiment, when the first communication node correctly detects the access signal, a single second communication node selects the slot and sends the access signal in the slot; therefore, the first communication node can correctly detect the access signal sent by the second communication node. In this case, the operations below may be performed.

The first communication node sends the L-th level slot decrement information and enters the next slot within the L-th level slot range. In this case, after the second communication node associated with the L-th access command information receives the L-th level slot decrement information, the slot count value of the second communication node is decremented by 1.

In this embodiment, the first communication node detects no access signal, indicating that the slot is an idle slot and that no second communication node selects the slot to send an access signal. In this case, the operations below may be performed.

The first communication node sends the L-th level slot decrement information and enters the next slot within the L-th level slot range. In this case, after the second communication node associated with the L-th access command information receives the L-th level slot decrement information, the slot count value of the second communication node is decremented by 1.

Here the slot count value is a time domain count unit. Slot durations corresponding to slot count values may be unequal in length. Each time the first communication node sends the L-th slot decrement information, it indicates that the previous slot ends or the next slot starts within the L-th slot range.

In an embodiment, when L is greater than 1, the (L - 1)-th level slot decrement information is sent after the access signal sent by the second communication node is detected in the slot n within the (L - 1)-th level slot range based on the L-th level slot range. The (L - 1)-th level slot decrement information is used for indicating that after a second communication node associated with the (L - 1)-th access command information receives the (L - 1)-th level slot decrement information, the slot count value of the second communication node is decremented by 1.

In this embodiment, when L is greater than 1, after detecting the access signal sent by the second communication node based on the L-th level slot range, the first communication node may send the (L - 1)-th level slot decrement information and enter the next slot within the (L - 1)-th level slot range. After receiving the (L - 1)-th level slot decrement information, the second communication node associated with the (L - 1)-th access command information decrements its slot count value by 1. If all the slots within the (L - 1)-th level slot range have been traversed, and if L is greater than 2, the (L - 2)-th level slot decrement information is sent to enter the next (L - 2)-th level slot. If all the slots within the (L - 1)-th level slot range have been traversed, and if L is greater than 2, the (L - 2)-th level slot decrement information is sent to enter the next slot within the (L - 2)-th level slot range. If all the slots within the (L - 2)-th level slot range have been traversed, and if L is greater than 3, the (L - 3)-th level slot decrement information is sent. The rest can be done in the same way. If all the slots within one first level slot range have been traversed, and if a to-be-accessed second communication node still exists, the first communication node sends the first access command information again.

In an embodiment, after access signals sent by at least two second communication nodes are detected in one slot within the L-th level slot range, the (L + 1)-th access command information is sent. The (L + 1)-th access command information is applied to second communication nodes associated with the (L + 1)-th access command information. The (L + 1)-th access command information corresponds to the (L + 1)-th level slot range.

In this embodiment, if the first communication node detects a collision of access signals of K second communication nodes in one slot within the L-th level slot range, and if K is greater than 1, the (L + 1)-th access command information may be sent. After receiving the (L + 1)-th access command information, the second communication nodes associated with the (L + 1)-th access command information randomly select one slot value within the corresponding (L + 1)-th level slot range and send access signals in the slot corresponding to the selected slot value. The first communication node detects the access signal within the (L + 1)-th level slot range.

Here each access signal is preceded by a preamble sequence. The first communication node may determine a collision of multiple access signals in the case where a preamble sequence is detected but no access signal is detected.

In an embodiment, the bit overhead of the L-th access command information is smaller than the bit overhead of the first access command information. Here L is greater than 1.

In this embodiment, the bit overhead of the L-th access command information is smaller than the bit overhead of the first access command information. L is greater than 2. This is because the first access command information is directed to all the to-be-accessed second communication nodes. In this case, the number of second communication nodes is relatively large, and thus a larger slot range is required for the access of these second communication nodes. Accordingly, the bit overhead of the first access command information is larger. The L-th access command information is only directed to to-be-accessed second communication nodes in one collided slot within the (L - 1)-th level slot range. In this case, the number of second communication nodes is relatively small, and thus only a relatively small slot range is required for the access of these second communication nodes. Accordingly, the bit overhead of the L-th access command information is relatively small.

FIG. 2 is a flowchart of another random access method according to an embodiment. As shown in FIG. 2, the random access method provided in this embodiment may be applied to a second communication node. The second communication nodes may be a terminal device. The random access method includes step 210 and step 220.

In step 210, the L-th access command information is received.

In this embodiment, the second communication nodes may receive the L-th access command information sent by a first communication node.

In step 220, if the L-th access command information satisfies an application condition of the L-th access command information, the L-th level slot range is determined according to the L-th access command information.

In this embodiment, after receiving the L-th access command information, the second communication node may determine, according to the association sequence number L included in the L-th access command information, whether the information is valid. That is, the second communication node determines whether the second communication node is a second communication node associated with the L-th access command information.

In step 230, one slot value is selected within the L-th level slot range, and an access signal is sent in a slot corresponding to the slot value.

In this embodiment, if the second communication node is a second communication node associated with the L-th access command information, the slot range is determined according to the L-th access command information. One slot value is selected within the slot range. The access signal is sent in the slot corresponding to the selected slot value.

Here the access signal may be one random bit sequence. For example, the second communication node may randomly generate 16 bits to be sent as the access signal. Alternatively, the access signal may include part of the information in the identification code (ID) of the second communication node. Alternatively, the access signal may also include other sequences or information, which is not specifically limited here.

In this embodiment, through receiving the L-th access command information, the second communication node determines the L-th level slot range according to the L-th access command information so as to complete the access of the second communication node by using the Q selection algorithm or the ALOHA method based on the L-th level slot range, thereby improving the access efficiency of the second communication node and reducing access delay.

In an embodiment, the application condition of the L-th access command information includes the following.

After the access signal is sent in a slot selected within the (L - 1)-th level slot range, the L-th access command information is received in the slot. L is an integer greater than 1.

In this embodiment, after a to-be-accessed second communication node sends the access signal on the slot selected within the (L - 1)-th level slot range, one slot value is randomly selected within the slot range corresponding to the L-th access command information if the L-th access command information is received in the slot or within one fixed time window. The access signal is sent in the slot corresponding to the selected slot value. L is greater than 1.

In an embodiment, the application condition of the L-th access command information includes the following.

The L-th access command information is received in a slot *n* within the (L - 1)-th level slot range, and the slot value selected within the (L - 1)-th level slot range belongs to *n* to *n* + k - 1 or belongs to

$$ n + \left\lceil \frac{M-n-1}{k} \right\rceil \cdot j . $$

Here L is greater than 1. k is greater than or equal to 0. j=1, 2, 3, ..., and k. M is the total number of slots within the (L - 1)-th level slot range.

In this embodiment, if the to-be-accessed second communication node receives the L-th access command information in the slot *n* within the (L - 1)-th level slot range, and if the slot value selected within the (L - 1)-th level slot range by the second communication node belongs to *n* to *n* + k - 1 or belongs to

$$ n + \left\lceil \frac{M-n-1}{k} \right\rceil \cdot j , $$

where j = 1, 2, 3, ..., and k, then one slot value is randomly selected within the slot range corresponding to the L-th access command information. The access signal is sent in the slot corresponding to the selected slot value.

In an embodiment, the random access method further includes the following operation. The slot value selected within the L-th level slot range is stored into a slot count value; and in the case where the slot count value is greater than 0, the slot count value is decremented by 1 each time the L-th level slot decrement information is received.

In this embodiment, the second communication node randomly selects one slot value within the L-th level slot range, stores the slot value into the slot count value, and receives the L-th level slot decrement information sent by the first communication node. In the case where the slot count value of the second communication node is greater than 0, the slot count value of the second communication node is decremented by 1 each time the L-th level slot decrement information is received. When the L-th level slot count value decreases to 0, the second communication node sends the access signal. If the L-th level slot value randomly selected after the second communication node receives the L-th access command information is 0, the second communication node directly sends the access signal.

Here the L-th level slot decrement information may include at least one of the slot decrement command type index and the association sequence number L. Here the slot decrement command type index corresponds to slot decrement information. The slot decrement information is used for indicating that the slot count value is decremented by 1. The association sequence number L corresponds to the second communication node associated with the L-th level slot decrement information. That is, the association sequence number L is used for determining which second communication nodes use the L-th level slot decrement information.

A random access method is exemplified below through different embodiments.

Embodiment one

A random access method provided in embodiment one of the present application includes the following.

In step 1, a first communication node sends the L-th access command information. The L-th access command information is applied to second communication nodes associated with the L-th access command information. The L-th access command information corresponds to the L-th level slot range. Here L is an integer greater than or equal to 1.

In this embodiment, if the first communication node detects a collision of access signals of $n$ second communication nodes in a slot $n$ within the (L - 1)-th level slot range, where $n$ is greater than 1, the first communication node sends the L-th access command information. The L-th access command information corresponds to the L-th level slot range. Here L is greater than 1. The function is to detect access signals of the $n$ second communication nodes in the slot $n$ within the (L - 1)-th level slot range based on the L-th level slot range. Therefore, the slot $n$ within the (L - 1)-th level slot range includes all the slots within the L-th level slot range.

In this embodiment, the L-th access command information includes at least one of the command type index, the slot range parameter, and the association sequence number L.

The command type index corresponds to an access command and is used for indicating to the second communication node that the information is access command information.

The slot range parameter is used for determining one slot range. For example, the slot range parameter includes a Q value according to which the slot range may be determined to be 0 to $2^Q$ - 1. Q is an integer greater than or equal to 0.

The association sequence number L indicates that the access command information is the L-th access command information. The L-th access command information is applied to the second communication nodes associated with the L-th access command information. Therefore, it is possible to determine which second communication nodes use the L-th access command information based on the association sequence number L. Specifically, the following is included.

When L is equal to 1, the association sequence number 1 corresponds to all to-be-accessed second communication nodes. That is, second communication nodes associated with the first access command information are all the to-be-accessed second communication nodes.

When L is greater than 1, the first communication node sends the L-th access command information in the slot $n$ within the (L - 1)-th level slot range. In this case, the association sequence number L corresponds to a to-be-accessed second communication node having sent an access signal in the slot n. That is, the second communication node associated with the L-th access command information is the to-be-accessed second communication node having sent the access signal in the slot n.

Alternatively, when L is greater than 1, the first communication node sends the L-th access command information in the slot $n$ within the (L - 1)-th level slot range. The L-th access command information further includes the number k of slots. The association sequence number L corresponds to the to-be-accessed second communication node selecting a slot from $n$ to $n + k - 1$ within the (L - 1)-th level slot range or corresponds to the to-be-accessed second communication node selecting a

slot $n + \left\lceil \dfrac{M-n-1}{k} \right\rceil \cdot j$ within the (L - 1)-th level slot range. Here k is greater than or equal to 0. j=1, 2, 3, ..., and k. M - $n$ - 1 denotes to the number of slots remaining untraversed within the (L - 1)-th level slot range. M is the total number of slots within the (L - 1)-th level slot range.

In this embodiment, the L-th access command information corresponding to one slot range may include at least one of the three manners below.

In manner one, the L-th access command information includes the slot range parameter and one slot range may be determined according to the slot range parameter. For example, the slot range parameter includes one Q value. The slot range may be determined as 0 to $2^Q$ - 1 according to the Q value. Q is an integer greater than or equal to 0.

In manner two, the L-th access command information corresponds to one fixed slot range. For example, the L-th level slot range corresponding to the L-th access command information is 0 to 3; that is, four slot values are included. In the case of different values of L, the L-th level slot range may be different.

In manner three, the L-th access command information corresponds to the slot range determined based on the latest-sent slot range parameter. Therefore, the L-th access command information may be used for indicating that the second communication node reselects a slot based on the latest-received slot range parameter to send the access signal.

In a specific example, when $1 \leq L < S$, the L-th access command information includes the L-th level slot range parameter, and the L-th level slot range may be determined according to the L-th level slot range parameter, which is the preceding manner one. In the case where $L \geq S$, the L-th access command information corresponds to one fixed L-th slot range. Here S is a threshold value and is greater than 1, which is the preceding manner two.

In step 2, the second communication node associated with the L-th access command information receives the L-th access command information, determines one slot range according to the access command information, selects one slot value within the slot range, and sends the access signal in the slot corresponding to the slot value.

In this embodiment, the second communication node receives the L-th access command information and may determine, according to the association sequence number L, whether the information is valid. That is, the second communication node determines whether the second communication node is a second communication node associated with the L-th access command information. If the second communication node is a second communication node associated with the L-th access command information, the slot range is determined according to the L-th access command information. One slot value is selected within the slot range. The access signal is sent in the slot corresponding to the selected slot value.

In a specific example, after a to-be-accessed second communication node sends the access signal on the slot selected within the (L - 1)-th level slot range, one slot value is randomly selected within the slot range corresponding to the L-th access command information if the L-th access command information is received in the slot or within one fixed time window. The access signal is sent in the slot corresponding to the selected slot value. L is greater than 1.

In another specific example, if the to-be-accessed second communication node receives the L-th access command information in the slot $n$ within the (L - 1)-th level slot range, and if the slot value selected within the (L - 1)-th level slot range by the second communication node belongs to $n$ to $n + k - 1$ or belongs to

$$n + \left\lceil \frac{M-n-1}{k} \right\rceil \cdot j$$, where j = 1, 2, 3, ..., and k, then one slot value is randomly selected within the slot range corresponding to the L-th access command information. The access signal is sent in the slot corresponding to the selected slot value. Here k is greater than or equal to 0. j=1, 2, 3, ..., and k. M is the total number of slots within the (L - 1)-th level slot range. Here L is greater than 1.

In a specific example, the operation in which the second communication node associated with the L-th access command information sends the access signal in the slot selected within the L-th level slot range includes the following: The second communication node randomly selects one slot value within the L-th level slot range, stores the slot value into a slot count value, and receives the L-th level slot decrement information sent by the first communication node. In the case where the slot count value of the second communication node is greater than 0, the slot count value of the second communication node is decremented by 1 each time the L-th level slot decrement information is received. When the L-th level slot count value decreases to 0, the second communication node sends the access signal. If the L-th level slot value randomly selected after the second communication node receives the L-th access command information is 0, the second communication node directly sends the access signal.

Here the L-th level slot decrement information includes at least one of the slot decrement command type index and the association sequence number L. Here the slot decrement command type index corresponds to slot decrement information. The slot decrement information is used for indicating that the slot count value is decremented by 1. The association sequence number L corresponds to the second communication node associated with the L-th level slot decrement information. That is, the association sequence number L is used for determining which second communication nodes use the L-th level slot decrement information.

In this embodiment, the access signal may be one random bit sequence. For example, the second communication node may randomly generate 16 bits to be sent as the access signal. Alternatively, the access signal may include part of the information in the identification code (ID) of the second communication node. Alternatively, the access signal may also include other sequences or information, which is not specifically limited here.

In step 3, the first communication node detects the access signal within the L-th level slot range.

In this embodiment, after sending the L-th access command information, the first communication node detects the access signal in a slot within the L-th level slot range. When the first communication node detects the access signal in one slot, one of the three detection cases below may occur.

In detection case one, the first communication node correctly detects the access signal. In this case, a single second communication node selects the slot and sends the access signal in the slot; therefore, the first communication node can correctly detect the access signal sent by the device in the slot.

In this case, one of the three operations is performed.

In operation one, the first communication node sends the L-th level slot decrement information and enters the next slot within the L-th level slot range. After the second communication node associated with the L-th access command information receives the L-th level slot decrement information, the slot count value of the second communication node is decremented by 1.

In operation two, the (L - 1)-th level slot decrement information is sent, and the next slot within the (L - 1)-th level slot range is entered. Here L > 1. This operation may be used in the case where all the slots in the L-th slot range have been traversed or the case where the first communication node needs to complete the current detection of the access signal based on the L-th slot range.

In operation three, the first communication node may send the L-th access command information again. This operation may be used in the case where among second communication nodes associated with the L-th access command information, a to-be-accessed second communication node still exists after all the slots within the corresponding L-th level slot range have been traversed or the case where the first communication node needs to update the L-th level slot range.

In detection case two, the first communication node detects no access signal. That is, the slot is an idle slot. No second communication node selects the slot to send an access signal.

In this case, one of the three operations is performed.

In operation one, the first communication node sends the L-th level slot decrement information and enters the next slot within the L-th level slot range. After the second communication node associated with the L-th access command information receives the L-th level slot decrement information, the slot count value of the second communication node is decremented by 1.

In operation two, the (L - 1)-th level slot decrement information is sent, and the next slot within the (L - 1)-th level slot range is entered. Here L > 1. This operation may be used in the case where all the slots in the L-th slot range have been traversed or the case where the first communication node needs to complete the current detection of the access signal based on the L-th slot range.

In operation three, the first communication node may send the L-th access command information again. This operation may be used in the case where among second communication nodes associated with the L-th access command information, a to-be-accessed second communication node still exists after all the slots within the corresponding L-th level slot range have been traversed or the case where the first communication node needs to update the L-th level slot range.

In detection case three, the first communication node detects a collision of multiple access signals. That is, the slot is a collided slot. Multiple second communication nodes select the slot and send access signals in the slot, thus resulting in the collision of the access signals.

In a specific example, each access signal is preceded by a preamble sequence. The first communication node may determine a collision of multiple access signals in the case where a preamble sequence is detected but no access signal is detected. That is, the slot is a collided slot.

If the first communication node detects a collision of access signals of $n$ second communication nodes in one slot within the L-th level slot range, and if $n$ is greater than 1, that is, in the case of detection case three, the (L + 1)-th access command information may be sent. After receiving the (L + 1)-th access command information, a second communication node associated with the (L + 1)-th access command information randomly selects one slot value within the corresponding (L + 1)-th level slot range and sends an access signal in the slot corresponding to the selected slot value. The first communication node detects the access signal within the (L + 1)-th level slot range.

In this embodiment, when L is greater than 1, after detecting the access signal sent by the second communication node based on the L-th level slot range, the first communication node may send the (L - 1)-th level slot decrement information and enter the next slot within the (L - 1)-th level slot range. After receiving the (L - 1)-th level slot decrement information, the second communication node associated with the (L - 1)-th access command information decrements its slot count value by 1. If all the slots within the (L - 1)-th level slot range have been traversed, and if L is greater than 2, the (L - 2)-th level slot decrement information is sent to enter the next (L - 2)-th level slot. If all the slots within the (L - 1)-th level slot range have been traversed, and if L is greater than 2, the (L - 2)-th level slot decrement information is sent to enter the next slot within the (L - 2)-th level slot range. If all the slots within the (L - 2)-th level slot range have been traversed, and if L is greater than 3, the (L - 3)-th level slot decrement information is sent. The rest can be done in the same way. If all the slots within one first level slot range have been traversed, and if a to-be-accessed second communication node still exists, the first communication node sends the first access command information again.

Further, second communication nodes associated with the (L - 1)-th access command information and the (L + 1)-th access command information are similar to the second communication node associated with the L-th access command information, with L - 1 and L + 1 substituted into L.

In a specific example, the bit overhead of the L-th access command information is smaller than the bit overhead of the first access command information. L is greater than 2. This is because the first access command information is directed to all the to-be-accessed second communication nodes. In this case, the number of second communication nodes is relatively large, and thus a larger slot range is required for the access of these second communication nodes. Accordingly, the bit overhead of the first access command information is larger. The L-th access command information is only directed to to-be-accessed second communication nodes in one collided slot within the (L - 1)-th level slot range. In this case, the number of second communication nodes is relatively small, and thus only a relatively small slot range is required for the access of these second communication nodes. Accordingly, the bit overhead of the L-th access command information is relatively small.

In this embodiment, if the first communication node needs to adjust the first level slot range, the first communication node sends the updated first access command information.

In this embodiment, the slot count value is a time domain count unit. Slot durations corresponding to slot count values may be unequal in length. Each time the first communication node sends the L-th slot decrement information, it indicates that the previous slot ends or the next slot starts within the L-th slot range.

In this embodiment, the processing processes corresponding to L - 1 and L + 1 are the same as the processing process of L, with L - 1 and L + 1 substituted into L. That is, L = L - 1, or L = L + 1.

Embodiment two

A random access method provided in embodiment two of the present application includes the following.

In step 1, a first communication node sends the L-th access command information. The L-th access command information corresponds to the L-th level slot range.

In this embodiment, when L is greater than 1, if the first communication node detects a collision of access signals of *n* second communication nodes in one (L - 1)-th level slot, the L-th access command information is sent. The function is to detect access signals of the *n* second communication nodes in an L-th level slot within the (L - 1)-th level slot. Therefore, the (L - 1)-th level slot includes all the L-th level slots corresponding to the L-th access command information. In a specific example, the (L - 1)-th level slot includes all the L-th level slots traversed for detecting the access signals of the *n* second communication nodes.

In this embodiment, the L-th access command information includes at least one of the command type index, the slot range parameter, and the association sequence number L. Here the command type index corresponds to an access command and is used for indicating to a second communication node that the information is access command information. The slot range parameter is used for determining the L-th level slot range. For example, the slot range parameter includes a Q value according to which the L-th level slot range may be determined to be 0 to $2^Q - 1$. Q is an integer greater than or equal to 0. The association sequence number L indicates that the current access command information is the L-th access command information or that the slot range corresponding to the current access command information is the L-th level slot range.

In step 2, a second communication node associated with the L-th access command information receives the L-th access command information, randomly selects one L-th level slot value within the L-th level slot range, and sends an access signal in the L-th level slot corresponding to the L-th level slot value.

In this embodiment, the L-th access command information corresponds to the L-th level slot range. The operation of the second communication node associated with the L-th access command information randomly selecting one L-th level slot value within the L-th level slot range includes at least one of the three manners below.

In manner one, the L-th access command information includes the L-th level slot range parameter and the L-th level slot range may be determined according to the parameter. For example, the L-th access command information includes one Q value. The slot range may be determined as 0 to $2^Q - 1$ according to the Q value. Q is an integer greater than or equal to 0.

Each time the second communication node associated with the L-th access command information receives the L-th access command information, the second communication node determines the slot range according to the L-th level slot range parameter included in the L-th access command information and randomly selects one L-th level slot value within the L-th level slot range.

In manner two, the L-th access command information corresponds to one fixed L-th level slot range. For example, the L-th level slot range corresponding to the L-th access command information is 0 to 3; that is, four slot values are included. In the case of different values of L, the L-th level slot range may be different.

After receiving the L-th access command information, the second communication node associated with the L-th access command information may determine one fixed L-th level slot range and randomly select one L-th level slot value within the L-th level slot range.

In manner three, the L-th access command information corresponds to the slot range determined based on the latest-sent slot range parameter. Therefore, the L-th access command information may be used for indicating that the second communication node reselects a slot based on the latest-received slot range parameter to send the access signal.

In a specific example, when $1 \le L < S$, the L-th access command information includes the L-th level slot range parameter, and the L-th level slot range may be determined according to the parameter, which is the preceding manner one. In the case where $L \ge S$, the L-th access command information corresponds to one fixed L-th slot range. Here S is a threshold value and is greater than 1, which is the preceding manner two.

In a specific example, the operation in which the second communication node associated with the L-th access command information sends the access signal in the L-th level slot corresponding to the L-th level slot value includes the following: The second communication node randomly selects one L-th level slot value within the L-th level slot range, stores the L-th level slot value into the L-th level slot count value, and receives the L-th level slot decrement information sent by the first communication node. In the case where the L-th level slot count value of the second communication node is greater than 0, the L-th level slot count value of the second communication node is decremented by 1 each time the L-th level slot decrement information is received. When the L-th level slot count value decreases to 0, the second communication node sends the access signal. If the L-th level slot value randomly selected after the second communication node receives the L-th access command information is 0, the second communication node directly sends the access signal.

In this embodiment, the access signal may be one random bit sequence. For example, the second communication node may randomly generate 16 bits to be sent as the access signal. Alternatively, the access signal may include part of the information in the identification code (ID) of the second communication node. Alternatively, the access signal may also include other sequences or information, which is not specifically limited here.

In step 3, the first communication node detects the access signal in the L-th level slot. L is an integer greater than or equal to 1.

In this embodiment, after sending the L-th access command information, the first communication node detects the access signal in the L-th level slot. When the first communication node detects the access signal in one L-th level slot, one of the three cases below may occur.

In detection case one for the L-th level slot, the first communication node correctly detects the access signal. In this case, a single terminal device (second communication node) selects one L-th level slot and sends the access signal in the L-th level slot; therefore, the first communication node can correctly detect the access signal sent by the device in the L-th level slot.

In this case, one of the three operations is performed.

In operation one, the first communication node sends the L-th level slot decrement information and enters the next L-th level slot. After the second communication node associated with the L-th access command information receives the L-th level slot decrement information, the L-th level slot count value of the second communication node is decremented by 1.

In operation two, the (L - 1)-th level slot decrement information is sent, and the next (L - 1)-th level slot is entered. Here L > 1. This operation may be used in the case where all the slots in the L-th slot range have been traversed or the case where the first communication node needs to complete the current (L - 1)-th level slot.

In operation three, the first communication node may send the L-th access command information again. This operation may be used in the case where among second communication nodes associated with the L-th access command information, a to-be-accessed second communication node still exists after all the slots within the corresponding L-th level slot range have been traversed or the case where the first communication node needs to update the L-th level slot range.

In detection case two for the L-th level slot, the first communication node detects no access signal. That is, the L-th level slot is an idle L-th level slot. No terminal device (second communication node) selects the L-th level slot. That is, no access signal is sent in the L-th level slot. In this case, one of the three operations is performed.

In operation one, the first communication node sends the L-th level slot decrement information and enters the next L-th level slot. After the second communication node associated with the L-th access command information receives the L-th level slot decrement information, the L-th level slot count value of the second communication node is decremented by 1.

In operation two, the (L - 1)-th level slot decrement information is sent, and the next (L - 1)-th level slot is entered. Here L > 1. This operation may be used in the case where all the slots in the L-th slot range have been traversed or the case where the first communication node needs to complete the current (L - 1)-th level slot.

In operation three, the first communication node may send the L-th access command information again. This operation may be used in the case where among second communication nodes associated with the L-th access command information, a to-be-accessed second communication node still exists after all the slots within the corresponding L-th level slot range have been traversed or the case where the first communication node needs to update the L-th level slot range.

In detection case three for the L-th level slot, the first communication node detects a collision of multiple access signals. That is, the L-th level slot is a collided L-th level slot. Multiple terminal devices (second communication nodes) select the L-th level slot and send access signals in the L-th level slot, thus resulting in the collision of the access signals.

In a specific example, each access signal is preceded by a preamble sequence. The first communication node may determine a collision of multiple access signals in the case where a preamble sequence is detected but no access signal is detected. That is, the slot is a collided slot.

If the first communication node detects a collision of access signals of $n$ second communication nodes in one L-th level slot, and if $n$ is greater than 1, that is, in the case of detection case three for the L-th level slot, the (L + 1)-th access command information may be sent. The (L + 1)-th access command information corresponds to the (L + 1)-th level slot range. After receiving the (L + 1)-th access command information, a second communication node associated with the (L + 1)-th access command information randomly selects one (L + 1)-th slot within the corresponding (L + 1)-th level slot range and sends an access signal in the (L + 1)-th level slot corresponding to the (L + 1)-th level slot value. The first communication node detects the access signal in the (L + 1)-th level slot.

In this embodiment, when L is greater than 1, in one collided (L - 1)-th level slot, after detecting the access signal sent by the second communication node based on the L-th level slot, that is, after the access of the second communication node is performed based on the L-th level slot, the first communication node may send the (L - 1)-th level slot decrement information and enter the next (L - 1)-th level slot. After receiving the (L - 1)-th level slot decrement information, the second communication node associated with the (L - 1)-th access command information decrements its (L - 1)-th level slot count value by 1. If all the slots within the (L - 1)-th level slot range have been traversed, and if L is greater than 2, the (L - 2)-th level slot decrement information is sent to enter the next (L - 2)-th level slot. The rest can be done in the same way. If all the slots within one first level slot range have been traversed, and if a to-be-accessed second communication node still exists, the first communication node sends the first access command information again.

In an embodiment, the second communication nodes associated with the L-th access command information include the following: When L is equal to 1, the second communication nodes associated with the L-th access command information are all to-be-accessed second communication nodes; and when L is greater than 1, the first communication node sends the L-th access command information in one (L - 1)-th level slot, and second communication nodes associated with the L-th access command information is to-be-accessed second communication nodes having sent access signals in the (L - 1)-th level slot. Second communication nodes associated with the (L - 1)-th access command information and the (L + 1)-th access command information are similar, with L - 1 and L + 1 substituted into the preceding L.

Specifically, after the to-be-accessed second communication node sends the access signal in the selected (L + 1)-th level slot, the to-be-accessed second communication node randomly selects one L-th level slot value within the L-th level slot range and sends the access signal in the corresponding L-th level slot if the L-th access command information is received in the (L + 1)-th level slot or within one fixed time window.

Further, second communication nodes associated with the (L - 1)-th access command information and the (L + 1)-th access command information are similar to the preceding second communication node associated with the L-th access command information, with L - 1 and L + 1 substituted into the preceding L.

In a specific example, the bit overhead of the L-th access command information is smaller than the bit overhead of the first access command information. L is greater than 2. This is because the first access command information is directed to all the to-be-accessed second communication nodes. The number of second communication nodes is relatively large, and thus a larger slot range is required for the access of these second communication nodes. Accordingly, the bit overhead of the first access command information is larger. The L-th access command information is only directed to to-be-accessed second communication nodes collided in one (L - 1)-th level slot. The number of second communication nodes is relatively small, and thus only a relatively small slot range is required for the access of these second communication nodes. Accordingly, the bit overhead of the L-th access command information is relatively small.

In this embodiment, if the first communication node needs to adjust the first level slot range, the first communication node sends the updated first access command information.

In this embodiment, the L-th level slot value is a time domain count unit. Slot durations corresponding to L-th level slot values may be unequal in length. Each time an L-th level slot value updates, it indicates that the previous slot ends and the next slot starts. The first level slot value to the L-th level slot value adopt their respective time domain count values.

In this embodiment, the processing processes corresponding to L - 1 and L + 1 are the same as the processing process of L, with L - 1 and L + 1 substituted into L. That is, L = L - 1, or L = L + 1.

Embodiment three

A random access method provided in embodiment three of the present application includes the steps below.

In step 1, a first communication node sends the first access command information. The first access command information is used for determining the first level slot range.

In this embodiment, the first access command information includes the first level slot parameter. The first level slot range may be determined according to the parameter. For example, the first level slot parameter is a Q value. The first level slot range is determined as 0 to $2^Q - 1$ according to the Q value. Q is an integer greater than or equal to 0.

In step 2, a second communication node randomly selects one first level slot value within the first level slot range and sends an access signal in the first level slot corresponding to the first level slot value.

In this embodiment, a to-be-accessed second communication node receives the first access command information and determines the first level slot range according to the first access command information.

In a specific example, the to-be-accessed second communication node randomly selects one first level slot value within the first level slot range, stores the first level slot value into the first level slot count value, and receives the first level slot decrement information sent by the first communication node. The first level slot count value of the second communication node is decremented by 1 each time the second communication node receives the first level slot decrement information. When the first level slot count value decreases to 0, the second communication node sends the access signal. If the first level slot count value randomly selected after the second communication node receives the first access command information is 0, the second communication node directly sends the access signal.

In this embodiment, the access signal may be one random bit sequence. For example, the second communication node may randomly generate 16 bits to be sent as the access signal. Alternatively, the access signal may include part of the information in the identification code (ID) of the second communication node. Alternatively, the access signal may also include other sequences or information, which is not specifically limited here.

In step 3, the first communication node detects the access signal within the first level slot range.

In this embodiment, after sending the first access command information, the first communication node detects the access signal in each first level slot. When the first communication node detects the access signal in one first level slot, one of the three cases below may occur.

In case one, the first communication node correctly detects the access signal. In this case, a single terminal device (second communication node) selects one first level slot and sends the access signal in the first level slot; therefore, the first communication node can correctly detect the access signal sent by the device in the first level slot.

If case one occurs when the first communication node detects the access signal in the first level slot, one of the two operations below is performed.

In operation one, the first communication node sends the first level slot decrement information and enters the next first level slot. After the to-be-accessed second communication node receives the first level slot decrement information, the first level slot count value of the second communication node is decremented by 1.

In operation two, the first communication node sends the first access command information again to be used for re-determining the first level slot range. If a to-be-accessed second communication node still exists after all the slots within one first level slot range have been traversed, or if the first communication node needs to update the first level slot range, this operation is adopted. Then step 1 is returned to.

In case two, the first communication node detects no access signal. That is, the first level slot is an idle slot. No terminal device (second communication node) selects the slot. That is, no access signal is sent in the slot.

If case two occurs when the first communication node detects the access signal in the first level slot, one of the two operations below is performed.

In operation one, the first communication node sends the first level slot decrement information and enters the next first level slot. After the to-be-accessed second communication node receives the first level slot decrement information, the first level slot count value of the second communication node is decremented by 1.

In operation two, the first communication node sends the first access command information again to be used for re-determining the first level slot range. If a to-be-accessed second communication node still exists after all the slots within one first level slot range have been traversed, or if the first communication node needs to update the first level slot range, this operation is adopted. Then step 1 is returned to.

In case three, the first communication node detects a collision of multiple access signals. That is, the slot is a collided slot. Multiple terminal devices (second communication nodes) select the slot and send access signals in the slot, thus resulting in the collision of the access signals.

In a specific example, each access signal is preceded by a preamble sequence. The first communication node may determine a collision of multiple access signals in the case where a preamble sequence is detected but no access signal is detected. That is, the slot is a collided slot.

In step 4, if the first communication node detects a collision of access signals of $n$ second communication nodes in one first level slot, and if $n$ is greater than 1, the second access command information is sent. The second access command information is used for determining the second level slot range.

In this embodiment, if the first communication node detects a collision of access signals of $n$ second communication nodes in one first level slot, and if $n$ is greater than 1, that is, in the case of case three, the second command information is sent. The function is to detect the access of the $n$ second communication nodes in the first level slot based on a second level slot.

In this embodiment, the first level slot value is a time domain count unit. Slot durations corresponding to different first level slot values may be unequal in length. Each time a first level slot value updates, it indicates that the previous first slot ends and the next first slot starts. The second level slot value is another time domain count unit. Slot durations corresponding to different second level slot values may be unequal in length. Each time a second level slot value updates, it indicates that the previous second slot ends and the next second slot starts. One first level slot in case three includes all the second level slots used for the access of the second communication nodes in the first level slot.

In this embodiment, the first communication node sends the second access command information in one first level slot. Then a second communication node associated with the second access command information determines the second level slot range according to the second access command information, randomly selects one second level slot value within the second level slot range, and sends an access signal in the corresponding second level slot. Here the second communication node associated with the second access command information is a to-be-accessed second communication node having sent the access signal in the first level slot.

Specifically, after the to-be-accessed second communication node sends the access signal in the selected first level slot, the to-be-accessed second communication node randomly selects one second level slot value within the second level slot range and sends the access signal in the corresponding second level slot if the second access command information is received in the first level slot or within one fixed time window.

In a specific example, the operation in which the second communication node associated with the second access command information sends the access signal in the second level slot includes the following: The second communication node randomly selects one second level slot value within the second level slot range, stores the second level slot value into the second level slot count value, and receives the second level slot decrement information sent by the first communication node. The second level slot count value of the second communication node is decremented by 1 each time the second communication node receives the second level slot decrement information. When the second level slot count value decreases to 0, the second communication node sends the access signal. If the second level slot value randomly selected after the second communication node receives the second access command information is 0, the second communication node directly sends the access signal.

In a specific example, the bit overhead of the second access command information is smaller than the bit overhead of the first access command information. This is because the first access command information is directed to all the to-be-accessed second communication nodes. The number of second communication nodes is relatively large, and thus a larger slot range is required for the access of these second communication nodes. Accordingly, the bit overhead of the first access command information is larger. The second access command information is only directed to to-be-accessed second communication nodes collided in one first level slot. The number of second communication nodes is relatively small, and thus only a relatively small slot range is required for the access of these second communication nodes. Accordingly, the bit overhead of the second access command information is relatively small.

In step 5, the first communication node detects the access signal in the second level slot.

In this embodiment, the first communication node detects the access signal in the second level slot. The detection process is similar to that in step 3, with the first-level slot replaced with the second-level slot.

Further, if case three occurs when the first communication node detects the access signal in the second level slot, that is, when the first communication node detects a collision of access signals of multiple second communication nodes in one second level slot, one of the two operations below is performed.

In operation one, the first communication node sends the second level slot decrement information and enters the next second level slot. After the second communication node associated with the second information, the second level slot count value of the second communication node is decremented by 1.

In operation two, the first level slot decrement information is sent, and the next first level slot is entered. This operation may be used in the case where all the slots in the second slot range have been traversed or the case where the second communication node needs to complete the current first slot.

In operation three, the first communication node may send the second access command information again. This operation may be used in the case where among second communication nodes associated with the second access command information, a to-be-accessed second communication node still exists after all the slots within the corresponding second level slot range have been traversed or the case where the first communication node needs to update the second level slot range.

In this embodiment, after the second communication node associated with the second access command information receives the second access command information in the selected first level slot each time, the second communication node determines the second level slot range according to the latest-received second access command information, randomly selects one second level slot value within the second level slot range, sends the access signal in the corresponding second level slot, and then continues to perform step 5.

In this embodiment, after the access signal of the second communication node is detected based on the second level slot in one collided first level slot, one of the two operations below may be performed.

In operation one, the first communication node sends the first level slot decrement information and enters the next first level slot. After the to-be-accessed second communication node receives the first level slot decrement information, the first level slot count value of the second communication node is decremented by 1.

In operation two, the first communication node sends the first access command information again to be used for re-determining the first level slot range. If a to-be-accessed second communication node still exists after all the slots within one first level slot range have been traversed, or if the first communication node needs to update the first level slot range, this operation is adopted. Then step 1 is returned to.

In this embodiment, after receiving the first access command information, the second communication node not accessed returns to step 2.

An embodiment of the present application further provides a random access apparatus. FIG. 3 is a structural diagram of a random access apparatus according to an embodiment. As shown in FIG. 3, the transmission apparatus may be configured in a first communication node. The apparatus includes a sending module 310 and a detection module 320.

The sending module 310 is configured to send the L-th access command information. The L-th access command information is applied to second communication nodes associated with the L-th access command information. The L-th access command information corresponds to the L-th level slot range.

The detection module 320 is configured to detect access signals sent by the second communication nodes within the L-th level slot range.

Here L is an integer greater than or equal to 1.

In the random access apparatus in this embodiment, the first communication node sends the L-th level slot range to second communication nodes whose access signals collide in one collided slot, and the access of the second communication nodes is completed by using the Q selection algorithm or the ALOHA method based on the L-th level slot range. In this case, the first communication node can detect the access signals sent by the second communication nodes in the L-th level slot range, thereby improving the access efficiency of the second communication nodes and reducing access delay.

In an embodiment, the operation of sending the L-th access command information includes: sending the L-th access command information in a slot *n* within the (L - 1)-th level slot range. L is an integer greater than 1.

In an embodiment, the operation of sending the L-th access command information includes: sending the L-th access command information when a collision of access signals from at least two second communication nodes is detected in the slot *n* within the (L - 1)-th level slot range. L is an integer greater than 1.

In an embodiment, when where L is equal to 1, the second communication nodes associated with the L-th access command information include all to-be-accessed second communication nodes.

In an embodiment, when L is greater than 1, the second communication nodes associated with the L-th access command information include to-be-accessed second communication nodes having sent access signals in the slot *n* within the (L - 1)-th level slot range.

In an embodiment, the second communication nodes associated with the L-th access command information include at least one of the following: a to-be-accessed second communication nodes whose slot values selected within the (L - 1)-th level slot range belong to slots within a range from *n* to *n* + k - 1; and a to-be-accessed second communication nodes whose slot values selected within the (L - 1)-th level slot range belong to

$$\mathrm{n} + \left\lceil \frac{M-n-1}{k} \right\rceil \cdot \mathrm{j} \, .$$

Here *n* is greater than or equal to 0. L is greater than 1. The number k of slots is greater than or equal to 0. The L-th access command information includes the indication information of the number k of slots. j=1, 2, 3, ..., and k. M is the total number of slots within the (L - 1)-th level slot range.

In an embodiment, the L-th access command information includes at least one of the following: the command type index, the slot range parameter, and the association sequence number L.

Here the command type index corresponds to access command information. The slot range parameter is used for determining one slot range. The association sequence number L indicates that the access command information is the L-th access command information.

In an embodiment, the slot *n* within the (L - 1)-th level slot range includes all the slots within the L-th level slot range.

In an embodiment, the L-th access command information corresponding to the L-th level slot range includes the following.

When 1 ≤ L < S, the L-th access command information includes a parameter of the L-th level slot range. The parameter is used for determining the L-th level slot range.

When L ≥ S, the L-th access command information corresponds to one fixed L-th level slot range.

Here S is a threshold value greater than 1.

In an embodiment, the random access method further includes the following.

The L-th level slot decrement information is sent. The L-th level slot decrement information is used for indicating that after the second communication node associated with the L-th access command information receives the L-th level slot decrement information, the slot count value of the second communication node is decremented by 1.

In an embodiment, when L is greater than 1, the (L - 1)-th level slot decrement information is sent after the access signal sent by the second communication node is detected in the slot *n* within the (L - 1)-th level slot range based on the L-th level slot range. The (L - 1)-th level slot decrement information is used for indicating that after a second communication node associated with the (L - 1)-th access command information receives the (L - 1)-th level slot decrement information, the slot count value of the second communication node is decremented by 1.

In an embodiment, after access signals sent by at least two second communication nodes are detected in one slot within the L-th level slot range, the (L + 1)-th access command information is sent. The (L + 1)-th access command information is applied to second communication nodes associated with the (L + 1)-th access command information. The (L + 1)-th access command information corresponds to the (L + 1)-th level slot range.

In an embodiment, the bit overhead of the L-th access command information is smaller than the bit overhead of the first access command information. Here L is greater than 1.

The transmission apparatus provided in this embodiment and the transmission method provided in the preceding embodiments belong to the same concept. For technical details not described in detail in this embodiment, reference may be made to any one of the preceding embodiments, and this embodiment has the same beneficial effects as the transmission method performed.

An embodiment of the present application further provides a random access apparatus.

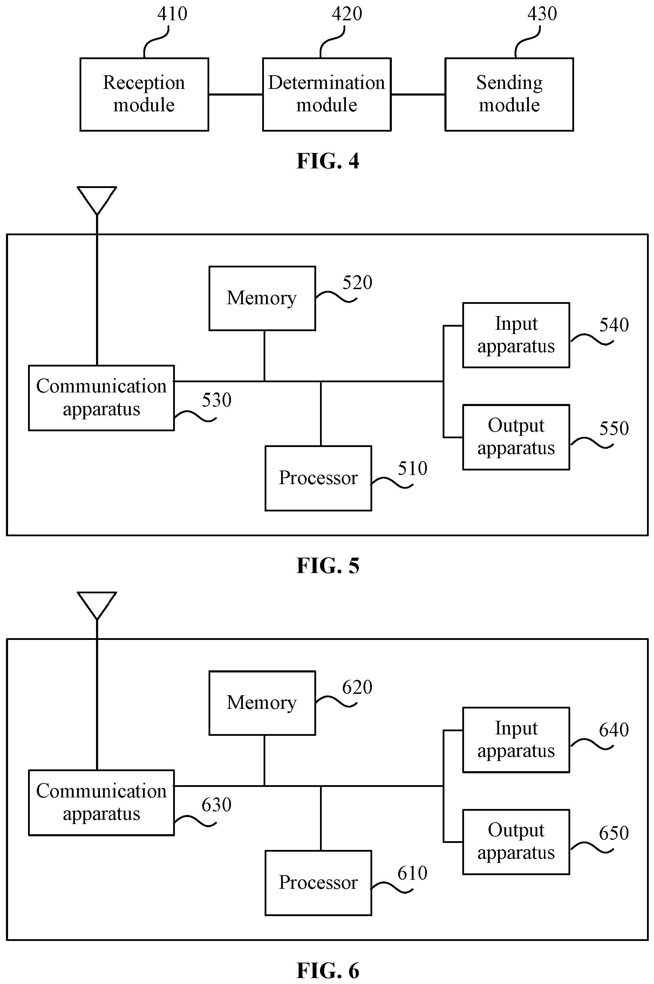

FIG. 4 is a structural diagram of another random access apparatus according to an embodiment. As shown in FIG. 4, the random access apparatus may be configured in a second communication node. The random access apparatus includes a reception module 410, a determination module 420, and a sending module 430.

The reception module 410 is configured to receive the L-th access command information.

The determination module 420 is configured to, if the L-th access command information satisfies an application condition of the L-th access command information, determine the L-th level slot range according to the L-th access command information.

The sending module 430 is configured to select one slot value within the L-th level slot range and send an access signal in a slot corresponding to the slot value.

Here L is an integer greater than or equal to 1.

In the random access apparatus in this embodiment, through receiving the L-th access command information, the second communication node determines the L-th level slot range according to the L-th access command information so as to complete the access of the second communication node by using the Q selection algorithm or the ALOHA method within the L-th level slot range, thereby improving the access efficiency of the second communication node and reducing access delay.

In an embodiment, the application condition of the L-th access command information includes the following.

After the access signal is sent in a slot selected within the (L - 1)-th level slot range, the L-th access command information is received in the slot. L is an integer greater than 1.

In an embodiment, the application condition of the L-th access command information includes the following.

The L-th access command information is received in a slot $n$ within the (L - 1)-th level slot range, and the slot value selected within the (L - 1)-th level slot range belongs to $n$ to $n$ + k-1 or belongs to

$$n + \left\lceil \frac{M-n-1}{k} \right\rceil \cdot j .$$

Here L is greater than 1. k is greater than or equal to 0. j=1, 2, 3, ..., and k. M is the total number of slots within the (L - 1)-th level slot range.

In an embodiment, the random access method further includes the following.

The slot value selected within the L-th level slot range is stored into a slot count value.

In the case where the slot count value is greater than 0, the slot count value is decremented by 1 each time the L-th level slot decrement information is received.

The transmission apparatus provided in this embodiment and the transmission method provided in the preceding embodiments belong to the same concept. For technical details not described in detail in this embodiment, reference may be made to any one of the preceding embodiments, and this embodiment has the same beneficial effects as the transmission method performed.

An embodiment of the present application further provides a first communication node. FIG. 5 is a diagram illustrating the hardware structure of a first communication node according to an embodiment. As shown in FIG. 5, the communication node provided in the present application includes a memory 520, a processor 510, and a computer program stored in the memory and executable by the processor. When the processor 510 executes the computer program, the preceding random access method is performed.

The first communication node may further include the memory 520. One or more processors 510 may be provided in the first communication node, and one processor 510 is shown as an example in FIG. 5. The memory 520 is configured to store one or more programs which, when executed by the one or more processors 510, cause the one or more processors 510 to perform the random access method in an embodiment of the present application.

The first communication node further includes a communication apparatus 530, an input apparatus 540, and an output apparatus 550.

The processor 510, the memory 520, the communication apparatus 530, the input apparatus 540, and the output apparatus 550 in the first communication node may be connected through a bus or in other manners. The connection through a bus is used as an example in FIG. 5.

The input apparatus 540 may be used for receiving inputted digital or character information and for generating key signal input related to user settings and function control of the terminal device. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs, and modules, such as program instructions/modules (for example, the sending module 310 and the detection module 320 in the random access apparatus) corresponding to the random access method in an embodiment of the present application. The memory 520 may include a program storage region and a data storage region, where the program storage region may store an operating system and an application program required by at least one function, and the data storage region may store data and the like created according to the use of the first communication node. In addition, the memory 520 may include a high-speed random-access memory and may also include a nonvolatile memory such as at least one disk memory, a flash memory, or another nonvolatile solid-state memory. In some examples, the memory 520 may further include memories located remotely relative to the processor 510, and these remote memories may be connected to the first communication node via a network. Examples of the network include, but are not limited to, the Internet, an intranet, a local area network, a mobile communication network, and a combination thereof.

An embodiment of the present application further provides a second communication node. FIG. 6 is a diagram illustrating the hardware structure of a second communication node according to an embodiment. As shown in FIG. 6, the second communication node provided in the present application includes a memory 620, a processor 610, and a computer program stored in the memory and executable by the processor. When the processor 610 executes the computer program, the preceding random access method is performed.

The second communication node may further include the memory 620. One or more processors 610 may be provided in the second communication node, and one processor 610 is shown as an example in FIG. 6. The memory 620 is configured to store one or more programs which, when executed by the one or more processors 610, cause the one or more processors 610 to perform the random access method in an embodiment of the present application.

The second communication node further includes a communication apparatus 630, an input apparatus 640, and an output apparatus 650.

The processor 610, the memory 620, the communication apparatus 630, the input apparatus 640, and the output apparatus 550 in the second communication node may be connected through a bus or in other manners. The connection through a bus is used as an example in FIG. 6.

The input apparatus 640 may be used for receiving inputted digital or character information and for generating key signal input related to user settings and function control of the terminal device. The output apparatus 650 may include a display device such as a display screen.

The communication apparatus 630 may include a receiver and a sender. The communication apparatus 630 is configured to perform information transceiving communication under the control of the processor 610.

As a computer-readable storage medium, the memory 620 may be configured to store software programs, computer-executable programs, and modules, such as program instructions/modules (for example, the reception module 410, the determination module 420, and the sending module 420 in the random access apparatus) corresponding to the random access method in an embodiment of the present application. The memory 620 may include a program storage region and a data storage region, where the program storage region may store an operating system and an application program required by at least one function, and the data storage region may store data and the like created according to the use of the second communication node. In addition, the memory 620 may include a high-speed random-access memory and may also include a nonvolatile memory such as at least one disk memory, a flash memory, or another nonvolatile solid-state memory. In some examples, the memory 620 may further include memories located remotely relative to the processor 610, and these remote memories may be connected to the second communication node via a network. Examples of the network include, but are not limited to, the Internet, an intranet, a local area network, a mobile communication network, and a combination thereof.

An embodiment of the present application provides a storage medium for storing a computer program. When the computer program is executed by a processor, the transmission method according to any embodiment of the present application is performed.

Optionally, the random access method is applied to a first communication node. The random access method includes the following: The L-th access command information is sent, where the L-th access command information is applied to second communication nodes associated with the L-th access command information, and the L-th access command information corresponds to the L-th level slot range; and access signals sent by the second communication nodes are detected within the L-th level slot range; where L is an integer greater than or equal to 1.

Optionally, the random access method is applied to a second communication node. The random access method includes the following: The L-th access command information is received; if the L-th access command information satisfies an application condition of the L-th access command information, the L-th level slot range is determined according to the L-th access command information; and one slot value is selected within the L-th level slot range, and an access signal is sent in a slot corresponding to the slot value; where L is an integer greater than or equal to 1.

A computer storage medium in an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage element, a magnetic storage device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by any suitable medium including, but not limited to, a wireless medium, a wire, an optical cable, a radio frequency (RF), or any suitable combination thereof.

Computer program codes for performing operations of the present application may be written in one or more programming languages or a combination thereof. The programming languages include object-oriented programming languages such as Java, Smalltalk, and C++ and may further include conventional procedural programming languages such as "C" and similar programming languages. Program codes may be executed entirely on a user computer, executed partly on a user computer, executed as a standalone software package, executed partly on a user computer and partly on a remote computer, or executed entirely on a remote computer or a server. In the case where the remote computer is involved, the remote computer may be connected to the user computer via any type of network including a local area network (LAN) or a wide area network (WAN) or may be connected to an external computer (for example, via the Internet provided by an Internet service provider).

Example embodiments of the present application are described above and are not intended to limit the scope of the present application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory apparatus and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

The detailed description of example embodiments of the present application is provided above through exemplary and non-limiting examples. However, considering the drawings and the claims, various modifications and adjustments to the preceding embodiments are apparent to those skilled in the art and do not deviate from the scope of the present application. Accordingly, the proper scope of the present application is determined according to the claims.

**Claims**

1. A random access method, applied to a first communication node, comprising:

    sending L-th access command information, wherein the L-th access command information is applied to second communication nodes associated with the L-th access command information, and the L-th access command information corresponds to an L-th level slot range; and detecting, within the L-th level slot range, access signals sent by the second communication nodes;

    wherein L is an integer greater than or equal to 1.

2. The random access method according to claim 1, wherein sending the L-th access command information comprises:
sending the L-th access command information in a slot *n* within an (L - 1)-th level slot range, wherein L is an integer greater than 1.

3. The random access method according to claim 2, wherein sending the L-th access command information comprises:

sending the L-th access command information when a collision of access signals from at least two second communication nodes is detected in the slot *n* within the (L - 1)-th level slot range, wherein L is an integer greater than 1.

4. The random access method according to claim 1, wherein when L is equal to 1, the second communication nodes associated with the L-th access command information comprise all to-be-accessed second communication nodes.

5. The random access method according to claim 1 or 2, wherein when L is greater than 1, the second communication nodes associated with the L-th access command information comprise to-be-accessed second communication nodes having sent the access signals in a slot *n* within an (L - 1)-th level slot range.

6. The random access method according to claim 1 or 2, wherein the second communication nodes associated with the L-th access command information comprise at least one of the following:

to-be-accessed second communication nodes whose slot values selected within an (L - 1)-th level slot range belong to slots within a range from *n* to *n* + *k* - *1;* and
to-be-accessed second communication nodes whose slot values selected within the (L - 1)-th level slot range belong to $n + \left\lceil \frac{M-n-1}{k} \right\rceil \cdot j$ ;

wherein *n* is greater than or equal to 0, L is greater than 1, a number *k* of slots is greater than or equal to 0;
the L-th access command information comprises indication information of the number *k* of slots, j=1, 2, 3, ..., and *k*, and M is a total number of slots within the (L - 1)-th level slot range.

7. The random access method according to claim 1, wherein the L-th access command information comprises at least one of the following: a command type index, a slot range parameter, and an association sequence number L;
wherein the command type index corresponds to access command information, the slot range parameter is used for determining one slot range, and the association sequence number L indicates that the access command information is the L-th access command information.

8. The random access method according to claim 1 or 2, wherein a slot *n* within an (L - 1)-th level slot range comprises all slots within the L-th level slot range.

9. The random access method according to claim 1, wherein the L-th access command information corresponding to the L-th level slot range comprises:

when $1 \leq L < S$, the L-th access command information comprising a parameter of the L-th level slot range, wherein the parameter is used for determining the L-th level slot range; and
when $L \geq S$, the L-th access command information corresponding to one fixed L-th level slot range;

wherein S is a threshold value greater than 1.

10. The random access method according to claim 1, further comprising:
sending L-th level slot decrement information, wherein the L-th level slot decrement information is used for indicating that a slot count value of the second communication nodes is decremented by 1 after the second communication nodes associated with the L-th access command information receives the L-th level slot decrement information.

11. The random access method according to claim 1 or 2, wherein
when L is greater than 1, sending (L - 1)-th level slot decrement information after the access signal sent by the second communication nodes is detected in a slot *n* within an (L - 1)-th level slot range based on the L-th level slot range;
wherein the (L - 1)-th level slot decrement information is used for indicating that after second communication nodes associated with (L - 1)-th access command information receives the (L - 1)-th level slot decrement information, a slot count value of the second communication nodes is decremented by 1.

12. The random access method according to claim 1, wherein after access signals sent by at least two second communication nodes are detected in one slot within the L-th level slot range, (L + 1)-th access command information is sent; wherein the (L + 1)-th access command information is applied to econd communication nodes associated with the (L + 1)-th access command information, and the (L + 1)-th access command information corresponds to an (L + 1)-th level slot range.

13. The random access method according to claim 1, wherein a bit overhead of the L-th access command information is smaller than a bit overhead of first access command information, wherein L is greater than 1.

14. A random access method, applied to a second communication node, the random access method comprising:

> receiving L-th access command information;
> in response to the L-th access command information satisfying an application condition of the L-th access command information, determining an L-th level slot range according to the L-th access command information; and
> selecting one slot value within the L-th level slot range, and sending an access signal in a slot corresponding to the slot value;

wherein L is an integer greater than or equal to 1.

15. The random access method according to claim 14, wherein the application condition of the L-th access command information comprises:
after sending an access signal in a slot selected within an (L - 1)-th level slot range, receiving the L-th access command information in the slot, wherein L is an integer greater than 1.

16. The random access method according to claim 14, wherein the application condition of the L-th access command information comprises:

> the L-th access command information being received in a slot $n$ within an (L - 1)-th level slot range, and a slot value selected within the (L - 1)-th level slot range belonging to $n$ to $n + k$ - 1 or
> belonging to $n + \left\lceil \dfrac{M-n-1}{k} \right\rceil \cdot j$ ;
> wherein L is greater than 1, k is greater than or equal to 0, j=1, 2, 3, ..., and k; and
> M is a total number of slots within the (L - 1)-th level slot range.

17. The random access method according to claim 14, further comprising:

> storing the slot value selected within the L-th level slot range into a slot count value; and
> when the slot count value is greater than 0, decrementing the slot count value by 1 each time L-th level slot decrement information is received.

18. A first communication node, comprising a memory, a processor, and a computer program stored in the memory and executable by the processor, wherein when the processor executes the program, the random access method according to any one of claims 1 to 13 is performed.

19. A second communication node, comprising a memory, a processor, and a computer program stored in the memory and executable by the processor, wherein when the processor executes the program, the random access method according to any one of claims 14 to 17 is performed.

20. A storage medium for storing a computer program, wherein when the program is executed by a processor, the random access method according to any one of claims 1 to 17 is performed.

Send the L-th access command information, where the L-th access command information is applied to second communication nodes associated with the L-th access command information, and the L-th access command information corresponds to the L-th level slot range ⎬ Step 110

Detect, within the L-th level slot range, access signals sent by the second communication nodes, where L is an integer greater than or equal to 1 ⎬ Step 120

**FIG. 1**

Receive the L-th access command information ⎬ Step 210

If the L-th access command information meets an application condition of the L-th access command information, determine the L-th level slot range according to the L-th access command information ⎬ Step 220

Select one slot value within the L-th level slot range, and send an access signal in a slot corresponding to the slot value; where L is an integer greater than or equal to 1 ⎬ Step 230

**FIG. 2**

310

320

| Sending module | | Detection module |

**FIG. 3**

410

Reception module

420

Determination module

430

Sending module

**FIG. 4**

Memory 520

Input apparatus 540

Communication apparatus 530

Output apparatus 550

Processor 510

**FIG. 5**

Memory 620

Input apparatus 640

Communication apparatus 630

Output apparatus 650

Processor 610

**FIG. 6**

## INTERNATIONAL SEARCH REPORT

| International application No. |
| --- |
| **PCT/CN2024/102817** |

### A. CLASSIFICATION OF SUBJECT MATTER

H04W 74/0833(2024.01)i

According to International Patent Classification (IPC) or to both national classification and IPC

### B. FIELDS SEARCHED

Minimum documentation searched (classification system followed by classification symbols)

IPC:H04W,H04L,H04M

Documentation searched other than minimum documentation to the extent that such documents are included in the fields searched

Electronic data base consulted during the international search (name of data base and, where practicable, search terms used)

CNTXT, ENTXT, ENTXTC, VEN, IEEE, 3GPP: 无源物联网, 碰撞, 冲突, 时隙, 子时隙, 子集, 范围, 随机接入, 响应, 质量, Q算法, passive internet of things, IOT, conflict, collision, slot, sub, response, quality, range

### C. DOCUMENTS CONSIDERED TO BE RELEVANT

| Category* | Citation of document, with indication, where appropriate, of the relevant passages | Relevant to claim No. |
| --- | --- | --- |
| PX | CN 117939692 A (ZTE CORP.) 26 April 2024 (2024-04-26)<br>claims 1-20 | 1-20 |
| X | CN 115828947 A (ZTE CORP.) 21 March 2023 (2023-03-21)<br>claims 1-17, and description, paragraphs 22-161 | 1-20 |
| A | CN 115884117 A (ZTE CORP.) 31 March 2023 (2023-03-31)<br>entire document | 1-20 |
| A | CN 105224970 A (SHANGHAI DIANJI UNIVERSITY) 06 January 2016 (2016-01-06)<br>entire document | 1-20 |
| A | WO 2022179340 A1 (HUAWEI TECHNOLOGIES CO., LTD.) 01 September 2022<br>(2022-09-01)<br>entire document | 1-20 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 September 2024** | **14 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/102817**

| Patent document cited in search report | | | Publication date (day/month/year) | Patent family member(s) | | | Publication date (day/month/year) |
|---|---|---|---|---|---|---|---|
| CN | 117939692 | A | 26 April 2024 | None | | | |
| CN | 115828947 | A | 21 March 2023 | WO | 2023138025 | A1 | 27 July 2023 |
| CN | 115884117 | A | 31 March 2023 | WO | 2024139436 | A1 | 04 July 2024 |
| CN | 105224970 | A | 06 January 2016 | None | | | |
| WO | 2022179340 | A1 | 01 September 2022 | MX | 2023009951 | A | 04 September 2023 |
| | | | | EP | 4283513 | A1 | 29 November 2023 |
| | | | | US | 2023401397 | A1 | 14 December 2023 |
| | | | | CN | 114980352 | A | 30 August 2022 |
| | | | | BR | 112023016857 | A2 | 19 September 2023 |

Form PCT/ISA/210 (patent family annex) (July 2022)